# EUROPÄISCHE PATENTSCHRIFT

(11) **EP 1 200 711 B1**
(45) Veröffentlichungstag und Bekanntmachung des Hinweises auf die Patenterteilung: **06.05.2004**
(21) Anmeldenummer: 00952929.8
(22) Anmeldetag: 13.07.2000
(51) Int. Cl.: E21D 11/10

(54) **VERFAHREN UND SYSTEM ZUR UMHÜLLUNG EINES ENDLOS VERLEGTEN ROHRSTRANGS MIT FÜLLBETON**
METHOD AND SYSTEM FOR ENCASING AN ENDLESS, LAID PIPELINE CONDUIT WITH BACKFILL CONCRETE
PROCEDE ET SYSTEME D'ENROBAGE D'UNE LIGNE DE TUBES SANS FIN A L'AIDE DE BETON DE REMPLISSAGE

(30) Priorität: 13.07.1999 DE 19932647
(43) Veröffentlichungstag der Anmeldung: 02.05.2002
(73) Patentinhaber: Meyer, Friedrich, 86949 Windach (DE)
(72) Erfinder: Meyer, Friedrich, 86949 Windach (DE)
(74) Vertreter: Frohwitter, Bernhard, Dipl.-Ing.
(86) Internationale Anmeldenummer: PCT/DE2000/002285
(87) Internationale Veröffentlichungsnummer: WO 2001/004463

(56) Entgegenhaltungen:
- EP-A- 0 205 853
- FR-A- 2 691 748
- FR-A- 2 752 877
- US-A- 2 089 149
- US-A- 5 419 632

## Beschreibung

Die Erfindung betrifft ein Verfahren zur Umhüllung eines in einem eine Stollenwandung aufweisenden Stollen endlos verlegten Rohrstrangs mit Füllbeton, mit in Axialrichtung des Stollens fortschreitender Arbeitsrichtung, wobei Rohrverlegung und Rohrumhüllung in voneinander unabhängigen Arbeitstakten ausgeführt werden und der Stollen einschließlich des Rohrstrangs in Abschnitte vorzugsweise gleicher Länge eingeteilt wird und in jedem Abschnitt im Rohrscheitel eine Öffnung zum Einleiten des Füllbetons in einen Hohlraum zwischen dem Rohrstrang und der Stollenwandung angebracht wird.

Die Erfindung betrifft auch ein System zur Umhüllung eines in einem Stollen endlos verlegten Rohrstrangs mit Füllbeton, mit einer in Axialrichtung des Stollens fortschreitenden Arbeitsrichtung, wobei der Rohrstrang samt Stollen in mehrere Abschnitte eingeteilt ist und in jedem Abschnitt eine wiederverschließbare Öffnung im Rohrscheitel, ein Füllstutzen, der im Bereich der Öffnung am Rohrstrang befestigt ist und senkrecht nach oben ausgerichtet ist, und eine im Inneren des Rohrstrangs verlaufende und an den Füllstutzen lösbar anschließbare Hochdruckleitung für Füllbeton vorgesehen sind.

Insbesondere bezieht sich die Erfindung auf die Verlegung von Großrohren in Stollen, die beliebig lang sein können. Wenn im folgenden von "Stollen" die Rede ist, so sollen hierunter auch Versorgungstunnel und andere Kanäle verstanden werden. Es kann sich hierbei um horizontale Stollen oder auch um geneigte Stollen handeln, wie sie insbesondere bei der Trinkwasserversorgung Verwendung finden.

Unter "Füllbeton" ist im vorliegenden Zusammenhang ein Produkt zu verstehen, das pumpfähig aushärtbar und geeignet ist, durch Nachverpressung hohlraumfrei zu verfüllen.

Die vorliegende Erfindung bezieht sich in erster Linie auf Rohrstränge aus Stahl, sie ist jedoch ebenso bei Rohrsträngen aus Beton, Guss- oder Kunststoffmaterialien anwendbar.
In der US 5 419 632 A ist eine Möglichkeit gezeigt, die bereits erstellte Auskleidung eines Tunnels mit Füllbeton zu hinterfüllen. Auf diese Weise soll der unvermeidliche, annähernd ringförmige Hohlraum zwischen der Auskleidung und dem Querschnitt der Tunnelöffnung ausgefüllt werden. Hierzu ist die Auskleidung in regelmäßigen Abständen mit Einfüllöffnungen versehen, die an der höchsten Stelle der Auskleidung durch diese hindurch in den genannten Hohlraum führen. Der Füllbeton wird auf dem Wagen eines Zuges hergestellt, der durch den Tunnel fährt, und wird aus dem Zug in den Hohlraum gepumpt. Die US 5 419 632 A kann damit als Beleg für ein Verfahren und ein System der oben genannten Art gelten.

Die US 2 089 149 A befasst sich mit einer Methode, die Wand eines Tunnels oder Abwasserkanals zu erstellen, indem in dem Tunnelquerschnitt durch eine Innenschalung ein Schalungshohlraum von ringförmigem Querschnitt erstellt wird. Die Innenschalung ist an ihrer höchsten Stelle in regelmäßigen Abständen mit Einführvorrichtungen versehen, durch die Beton in den Schalungshohlraum gepumpt wird. Nach dem Aushärten des verfüllten Betons werden die Einführvorrichtungen wie auch die gesamte Innenschalung entfernt.

Nach dem Vorschlag gemäß der FR 2 752 877 A wird ein Rohrstrang im Halbschild-Vortrieb in das Erdreich eingeführt. Dabei befindet sich am Kopf des einzuführenden Rohrstrangs eine Halbschildmaschine mit einem Schneidkopf, während das rückwärtige Ende des Rohrstrangs unter dem Druck eines Arbeitszylinders steht. Der Durchmesser des Schneidkopfes ist größer als der Außendurchmesser des Rohrstrangs. Der Rohrstrang ist aus einzelnen Teilstücken zusammengesetzt, darunter auch solchen, die in radialer Richtung verlaufende, sternförmig angeordnete Durchgangsöffnungen aufweisen. Unter der gemeinsamen Wirkung des Schneidkopfes und des Arbeitszylinders arbeitet sich der Rohrstrang in das Erdreich hinein und wird abschnittsweise um weitere Teilstücke verlängert. Der infolge des größeren Schneidkopf-Durchmessers entstehende Ringraum zwischen dem Außendurchmesser des Rohrstrangs und dem umgebenden Erdreich wird mit einem Leerraum-Füllmaterial ausgefüllt, das durch die genannten Durchgangsöffnungen eingespritzt wird. Das Leerraum-Füllmaterial ist gleichmäßig um den Umfang des einzuführenden Rohrstrangs vorhanden, so dass die Reibung zwischen dem Rohrstrang und dem umgebenden Erdreich verringert ist. Auf diese Weise kann ein Rohrstrang von erheblicher Länge vorangetrieben werden, und die Anzahl der erforderlichen Arbeitsschächte mit zusätzlichen Arbeitszylindern wird verringert.

Nach dem der Anmelderin aus der Praxis geläufigem Stand der Technik ist es bekannt, zum Verlegen von Rohrleitungen Teilstränge in die Stollen einzufahren und durch Innenschweißnähte miteinander zu verbinden. Damit die Rohrleitungen fest in die Hohlräume eingebunden werden, erfolgt die Umhüllung der Rohrleitungen mit Füllbeton, welcher den Raum zwischen Rohrstrang und Stollenwandung möglichst vollständig ausfüllen sollte. Neben der festen Einbindung des Rohrstrangs in den Stollen übernimmt der Füllbeton aufgrund seiner basischen Eigenschaften zusätzlich den Korrosionsschutz der ansonsten ungeschützten Stahlleitungen.

Im Einzelnen wird wie folgt verfahren: Die Rohre werden in Teilsträngen in den Hohlraum eingebracht und dort zu einer maximalen Länge von 100 m miteinander verbunden und an den bereits umhüllten Rohrstrang angeschlossen. Häufig treten erhebliche technische Schwierigkeiten beim Zusammenführen des neuen Teilstranges mit dem festen Rohrende auf, da die Bewegungsfreiheit des Teilstranges infolge der Einfahrkonstruktion und der Auftriebssicherungen sehr eingeschränkt ist. Nach Vorbau von längstens einhundert Metern Rohrleitung wird der Ringraum am offenen Leitungsende für die Verfüllung abgeschottet.

Das Schott ist mit aufwendigen Gummidichtungen versehen, um den druckdichten Abschluss zwischen Rohraußenwand und Hohlrauminnenwand herzustellen. Außerdem muss das einhäuptige Schott aufgrund des zu erwartenden Fülldruckes an der freien Hohlrauminnenseite massiv abgestützt werden, wodurch die Zugänglichkeit zum Schott erheblich eingeschränkt wird.

Über die durch das Schott geführten Förderleitungen wird der Ringraum in einem Arbeitsgang mit Füllbeton gefüllt. Auftriebssicherungen entlang der Rohrleitung tragen den vollen Auftrieb auf die Rohrleitung im Firstbereich ab. Auftriebsbewegungen der Rohrleitung bewirken im Bereich der Abschottung Verformungen und führen zu Undichtigkeiten während des Füllvorganges. Durch plötzliche Überlagerung von Flüssigkeitsdruck und Fülldruck gegen Ende der Beifüllung besteht die Gefahr, dass das Schott überdrückt wird und sich der Füllbeton in den Arbeitsraum ergießt.

Die noch vollen Förderleitungen sind durch eine Rückleitung zu entleeren und zu reinigen, das Füllgut ist zu entsorgen. Nach beginnender Aushärtung des Füllbetons (ca. 3 Tage) kann der Absetzraum in der Firste verpresst werden. Diese Restraumverpressung erfolgt über die gesamte Abschnittslänge (100 m) vom Schottbereich aus. Aus Gründen des aufwendigen Reinigungsvorganges der Förderleitungen erfolgt die Anmischung des Trockenmaterials vor dem Schott. Das dazu benötigte Material und die Maschinen sind eigens einzubringen und wieder zu entfernen. Erst nach Verfestigen des Füllbetons in der Firste kann das Schott ausgebaut werden.

Während der Ringraumverfüllung bis zum Zeitpunkt des Schottausbaus kann kein Rohrbau stattfinden. Während der Zeit des darauf folgenden Rohrbaus können keine Verfüllarbeiten durchgeführt werden. Da diese Arbeiten im Untertagebau stattfinden, beträgt der normale Arbeitstag 24 Stunden. Rohrlegearbeiten und Verfüllarbeiten werden von unterschiedlichen Berufsgruppen in Schichtarbeit ausgeführt. Da die Verlege- und Verfüllarbeiten nicht parallel ausgeführt werden können und aufgrund des Abbindevorganges zusätzlich lange Arbeitsunterbrechungen erzwungen werden, sind diese Arbeiten nicht wirtschaftlich abzuwickeln.

Das Absetzvolumen des Füllbetons beträgt etwa 3 %. Durch Verfüllung des Ringraumes in einem Arbeitsgang entsteht ein großes Absetzvolumen. Durch Nachverpressen dieses Absetzraumes in einem eigenen Arbeitsgang entsteht wiederum ein relativ großes Absetzvolumen, welches die Ursache für unerwünschte Wegigkeiten (Wasserlauf und Gasansammlung) in der Hohlraumfirste sein kann. Die hohlraumfreie Verfüllung in der Firste ist nicht gesichert. Langzeitlich ist mit Bodensetzungen durch nicht verpressten Holraum zu rechnen.

Aus der EP 0 205 853 A2 ist eine Schildvortriebsmaschine bekannt, mit der in bekannter Weise für Zwecke des Bergbaus oder des Verkehrs Tunnel, Stollen oder dergl. erstellt werden. Im Zuge des Schildvortriebs wird dabei in aufeinanderfolgenden Bauabschnitten an Ort und Stelle eine Auskleidung der Tunnel- oder Stollenwandung angefertigt. Hierzu wird Beton in den Hohlraum einer Schalung eingebracht, die aus einer Innenschalung und einer Außenschalung besteht. Innen- und Außenschalung sind mit dem Vortriebsschild verbunden. Die Innenschalung besteht aus einzelnen axial hintereinander angeordneten Rohrabschnitten, die im Zuge des Schildvortriebs immer wieder umgesetzt werden. Nach dem Aushärten des Betons im Bereich des letzten Rohrabschnittes wird dieser nach vom, unmittelbar hinter den Vortriebsschild versetzt, wodurch ein neuer, auszufüllender Schalungsabschnitt entsteht. Hierzu ist jeder Rohrabschnitt der Innenschalung aus einzelnen Segmenten (Tübbings) aufgebaut, so dass er zum Umsetzen zerlegt werden kann. Die Innenschalung ist mit Einpressleitungen versehen, durch die Beton in den auszufüllenden Schalungsabschnitt eingebracht wird.

Die Auskleidung des Tunnels- oder Stollens entsteht somit dadurch, dass Beton aus dem Innern der die Innenschalung bildenden Rohrabschnitte durch diese hindurch in einen Schalungsabschnitt eingebracht wird.

Der vorliegenden Erfindung liegt im Wesentlichen die Aufgabe zugrunde, ein Verfahren und ein entsprechendes System der eingangs genannten Art anzugeben, bei dem die Herstellungskosten insbesondere dadurch gesenkt werden können, dass die Verlegung des Rohrstrangs einerseits und die Umhüllung des Rohrstrangs mit Füllbeton andererseits parallel durchgeführt werden können

Hinsichtlich des Verfahrens wird diese Aufgabe erfindungsgemäß dadurch gelöst, dass der Füllbeton in mehreren Lagen durch die Öffnung in dem Hohlraum zwischen dem Rohrstrang und der Stollenwandung in jedem Abschnitt eingebracht wird, wobei als. erste Fülllage eine solche Menge von Füllbeton eingebracht wird, dass in dem Abschnitt die Auftriebskraft des Füllbetons das Gewicht der Rohrleitung im Wesentlichen nicht überschreitet, und nach Absetzen und Verfestigen der ersten Fülllage eine zweite Fülllage zum Verschließen eines Absetzspaltes sowie der Sicherung von Adhäsionskräften zwischen dem Rohrstrang und dem Füllbeton eingebracht wird und nach dem jeweiligen Ansteifen des Füllbetons lagenweise der Hohlraum zwischen dem Rohrstrang und der Stollenwandung im Wesentlichen vollständig verfüllt wird, wobei zumindest das Einbringen der jeweils letzten Lage vorzugsweise in in Arbeitsrichtung aufeinanderfolgenden Arbeitsschritten erfolgt, und dass die Öffnungen der gefüllten Abschnitte anschließend verschlossen werden.

Hinsichtlich des Systems erfolgt die Lösung der der Erfindung zugrundeliegenden Aufgabe durch mindestens eine in der Firste des Stollens angeordnete, fest installierte Nachverpress-Rohrleitungsanordnung, die im Bereich des Füllstutzens endet, und mindestens eine im Inneren des Rohrstrangs verlaufende und anstelle der Hochdruckleitung mit dem Füllstutzen lösbar verbindbare und an die mindestens eine fest installierte Nachverpress-Rohrleitungsanordnung anschließbare Nachverpressleitung.

Der Kern der Erfindung liegt somit darin, dass einmal das Einbringen des Füllbetons in den den Rohrstrang umgebenden Hohlraum ausschließlich vom Inneren des Rohrstrangs her erfolgt, damit der Rohrstrang ungehindert verlegt werden kann. Die Trennung von Rohrverlegung und Rohrumhüllung in voneinander unabhängige Arbeitstakte garantiert eine ungestörte fortlaufende Arbeitsweise. Zum anderen erfolgt das Einbringen des Füllbetons in mehreren Lagen; das garantiert eine hohe Ausführungsqualität bei wirtschaftlichen Herstellungskosten. Während somit, ggf. auch in loser Folge, Abschnitt für Abschnitt der Füllbeton eingebracht und die vorher erstellte Öffnung wieder verschlossen wird, können in Arbeitsrichtung gesehen weiter vorne die Rohrverlegearbeiten ungestört durchgeführt werden.

In besonders bevorzugter Weiterbildung des erfindungsgemäßen Verfahrens sind folgende weitere Schritte vorgesehen:
a) In jedem Abschnitt Befestigen von an der Firste des Stollens in Axialrichtung verlaufenden Nachverpressleitungen, die oberhalb der Öffnung enden, und zwar vor dem lageweisen Einbringen des Füllbetons, und
b) nach dem vollständigen Einbringen aller Lagen des Füllbetons Nachverpressung durch Einbringen von Füllbeton in die Nachverpress-Rohrleitungsanordnungen durch den Rohrstrang hindurch.

Nachdem sich der Füllbeton bei seiner Aushärtung in bestimmtem Umfang absetzt, entsteht in der Firste des Stollens ein Hohlraum, der über die fest installierten Nachverpressleitungen zuverlässig und vollständig gefüllt werden kann. Auf diese Weise ist eine praktisch hohlraumfreie Umhüllung des Rohrstrangs möglich.

In bevorzugter Weiterbildung der Erfindung ist weiterhin vorgesehen, dass vor dem lageweisen Einbringen des Füllbetons an den jeweiligen Abschnittsgrenzen Fließbarrieren eingebaut werden, die insbesondere aus Einkornbeton hergestellt werden können. Der Einbau solcher Fließbarrieren unterhalb der Rohrsohle, die vorzugsweise im Zuge der fortlaufenden Rohrverlegung erfolgt, begrenzt den jeweiligen Abschnitt der Hohlraumverfüllung im kritischen Auftriebsbereich. Die Auftriebskraft des Füllbetons darf das Gewicht der Rohrleitung nicht überschreiten. Die Fließbarrieren aus Einkornbeton werden bei der laufenden Rohrverlegung vorzugsweise mindestens bis auf Höhe der Gleichgewichtsgrenze zwischen Rohrgewicht und Auftriebskraft eingebaut.

In vorteilhafter Weiterbildung der Erfindung erfolgt das lageweise Einbringen des Füllbetons in folgenden Schritten:
a) Einbringen mindestens einer ersten Fülllage, bis der Rohrstrangabschnitt eines Abschnitts gerade noch nicht auf der Fülllage aufschwimmt,
b) Einbringen einer zweiten Fülllage aus spezifisch leichterem Füllbeton nach dem Absetzen und Verfestigen der ersten Fülllage, und
c) Einbringen weiterer Fülllagen nach zumindest teilweisem Verfestigen der vorhergehenden Lage.

Das Einbringen der zweiten Fülllage aus spezifisch leichterem Füllbeton dient dazu, den am Rohr entstandenen Absetzspalt zu verschließen und die Adhäsionskräfte zwischen Rohr und Füllbeton zu sichern.

Beim Vorgehen nach dem erfindungsgemäßen System wird zum Befüllen des Hohlraums zunächst die Druckleitung an den jeweiligen Rohrstutzen angeschlossen, und die in Rede stehenden Abschnitte werden lagenweise vollständig gefüllt. Nach dem Absetzen des Füllbetons wird die Nachverpressleitung durch den Füllstutzen hindurch an der fest installierten Nachverpress-Rohrleitungsanordnung angeschlossen und nachverpresst. Nach dem Wiederverschließen der Offnung verbleibt die fest installierte Nachverpress-Rohrleitungsanordnung im Stollen.

Nachdem die Öffnung eines jeden Abschnittes zwischen den beiden Enden des Abschnittes angeordnet ist, sind vorzugsweise zwei fest installierte Nachverpress-Rohrleitungsanordnungen vorgesehen, die sich von der Öffnung beziehungsweise vom Füllstutzen aus im Wesentlichen in entgegengesetzte Richtungen erstrecken, um im Wesentlichen den gesamten Abschnitt abzudecken.

In bevorzugter Weiterbildung der Erfindung weist jede Nachverpress-Rohrleitungsanordnung einen Rohrabschnitt mit einer Anzahl von über den Rohrabschnitt verteilten radialen Durchgangsbohrungen auf, die zunächst insbesondere mittels eines Klebebandes verschlossen sind, damit sie sich beim Befüllen mit Füllbeton nicht zusetzen. Erst wenn die Nachverpresseinrichtung aktiviert wird, öffnen sich diese Durchgangsbohrungen aufgrund des hohen Druckes, und Füllbeton kann durch die Durchgangsbohrungen nach außen austreten und den verbleibenden Hohlraum ausfüllen.

Gemäß einem weiteren vorteilhaften Merkmal der Erfindung ist eine im Inneren des Rohrstrangs verlaufende und anstelle der Druckleitung für Füllbeton mit dem Füllstutzen lösbar verbindbare Leitung zum Zuführen von Spülwasser vorgesehen. Diese Wasserspülung wird vor dem Einbringen der letzten Lage bzw. nach dem Einbringen der letzten Lage im jeweils vorhergehenden Abschnitt aktiviert, um die Wegigkeit für die nachfolgende Befüllung zu sichern.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher beschrieben wird. In der Zeichnung zeigen in halbschematischer Darstellung:

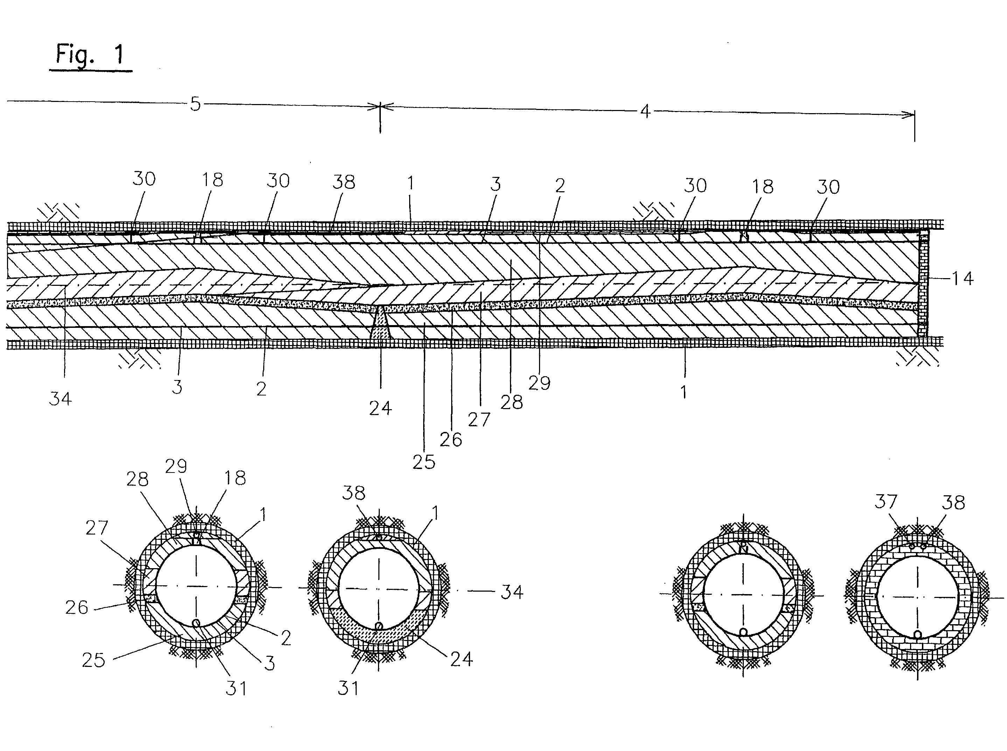

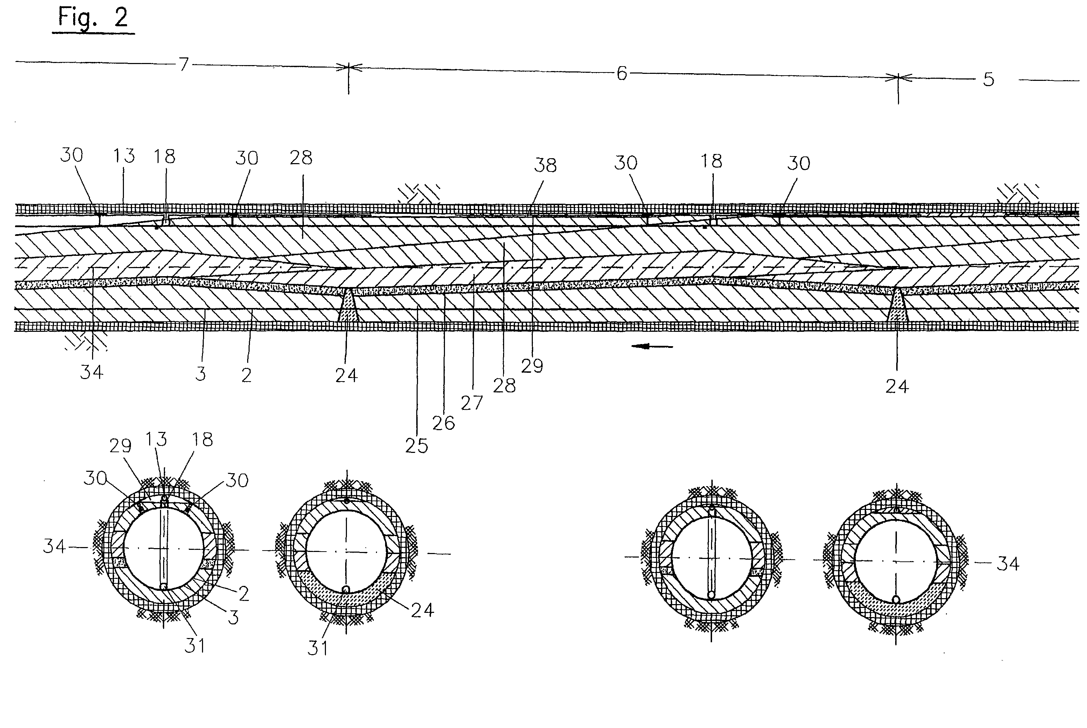

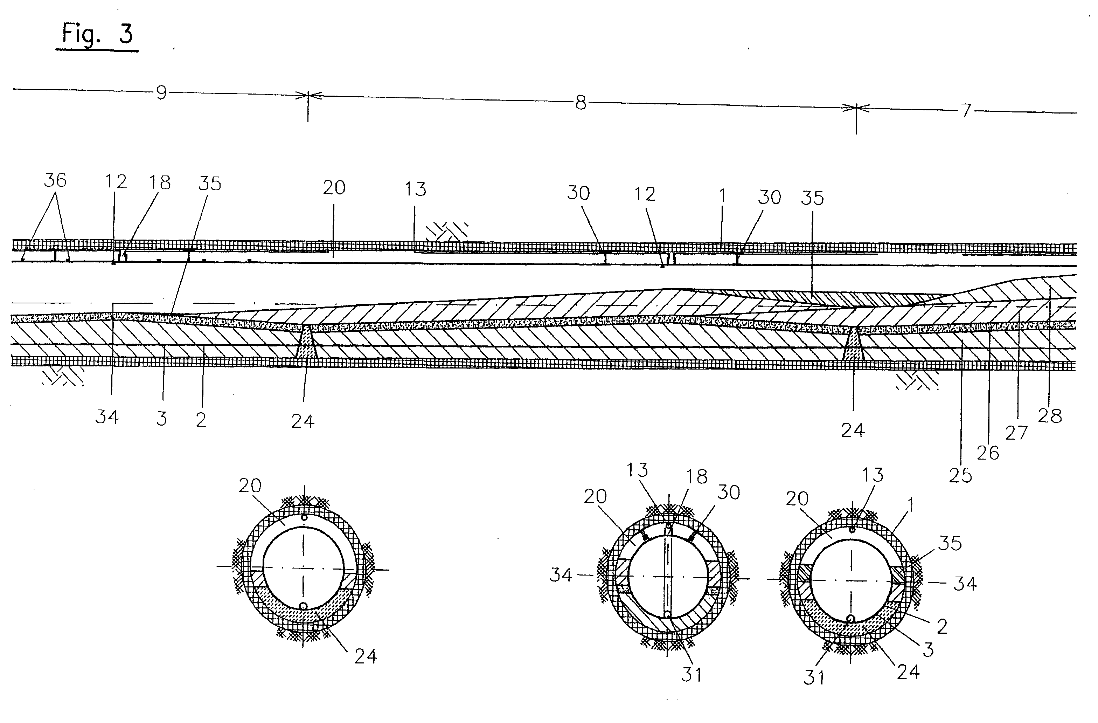

Fig. 1 bis 4 jeweils einen horizontalen Schnitt durch den Stollen, wobei insbesondere die verschiedenen Lagen des bereits eingebrachten Füllbetons erkennbar sind; des Weiteren sind unterhalb der Schnittansicht in Längsrichtung des Stollens diverse Querschnitte durch den Stollen an den jeweiligen Positionen dargestellt. Die Figuren schließen von rechts nach links verlaufend jeweils aneinander an.

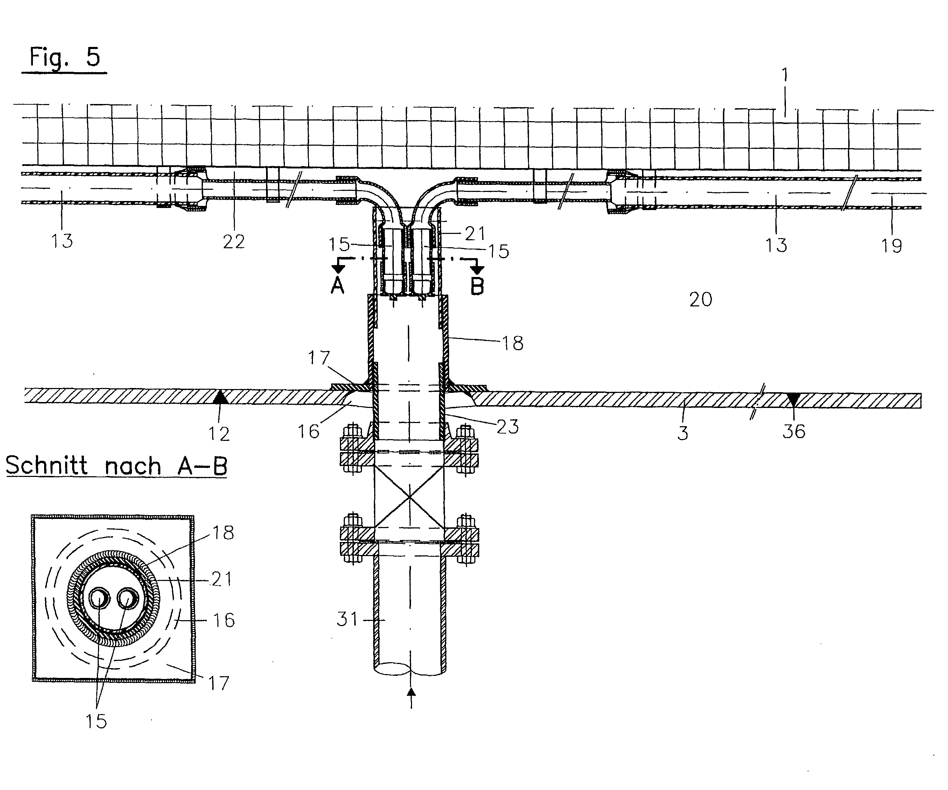

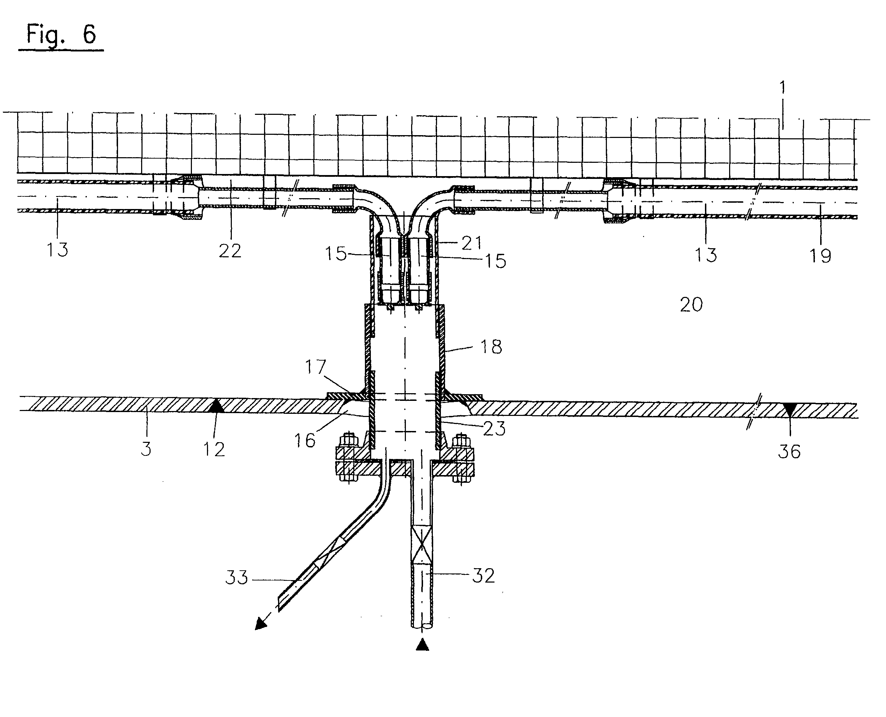

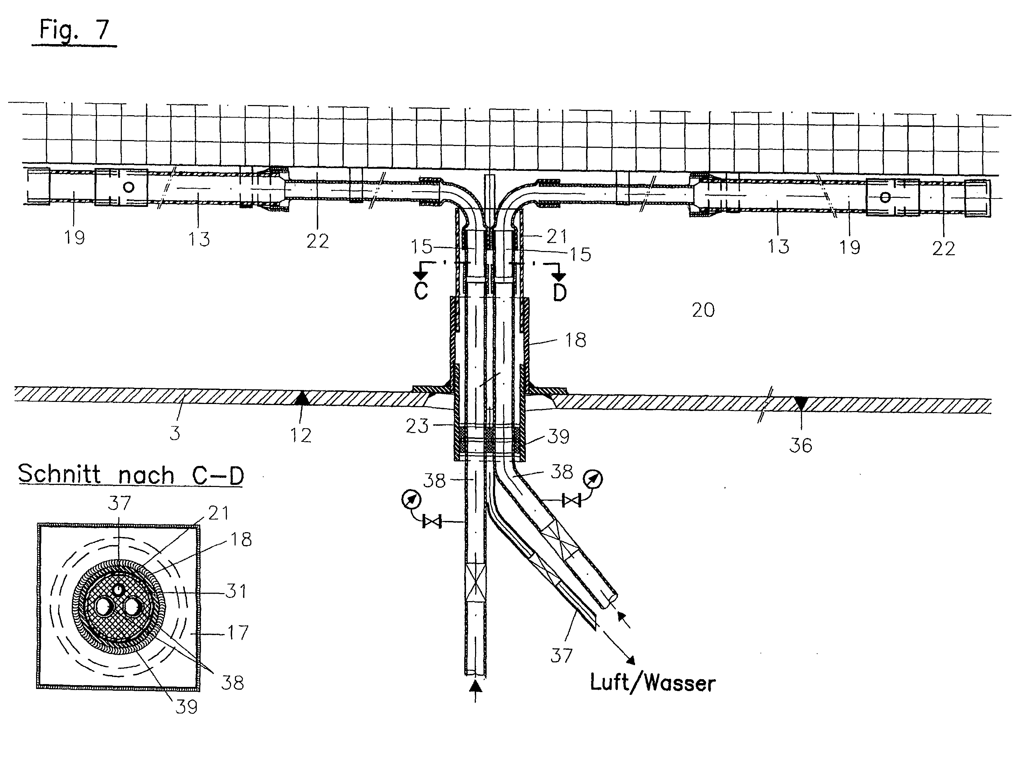

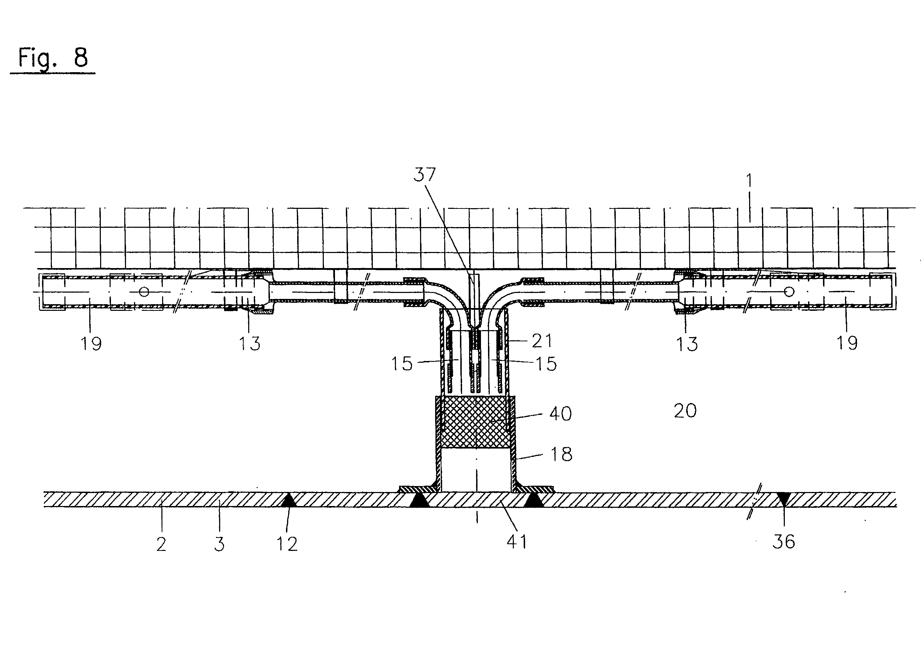

Fig. 5 bis 8 zeigen jeweils vergrößerte Schnittansichten im Bereich einer Öffnung, jeweils in unterschiedlichen Betriebszuständen, nämlich Fig. 5 mit angesetzter Hochdruckleitung für Füllbeton, Fig. 6 mit angesetzter Wasserspülung, Fig. 7 mit angeschlossenen Nachverpressleitungen und Fig. 8 im Endzustand.

Beim dargestellten Ausführungsbeispiel handelt es sich um einen Stollen 1, der eine lichte Weite von 2900 mm aufweist und in der gewählten Darstellung von rechts nach links ein geringes Gefälle aufweist. Der Rohrstrang 2 besteht aus Stahlrohren 3 mit einem Durchmesser von 2200 mm, wobei die Einzelrohre eine Länge von 12 m aufweisen. Die Länge eines jeden Abschnitts 4 bis 10, die sich in erster Linie aus dem Gefälle und der Fließfähigkeit des gewählten Füllbetons ergibt, ist im vorliegenden Fall 150 m. Die Dichte des Füllbetons beträgt ca. 1,54 kg/dm³.

Die Anlieferung des trockenen Füllbetons auf der Baustelle erfolgt in der Regel in Silozügen (ca. 30 t Füllgewicht), die Vermischung mit Wasser zum einbaufähigen Füllbeton erfolgt in Mischvorrichtungen außerhalb der Rohrleitung, in der Regel übertage.

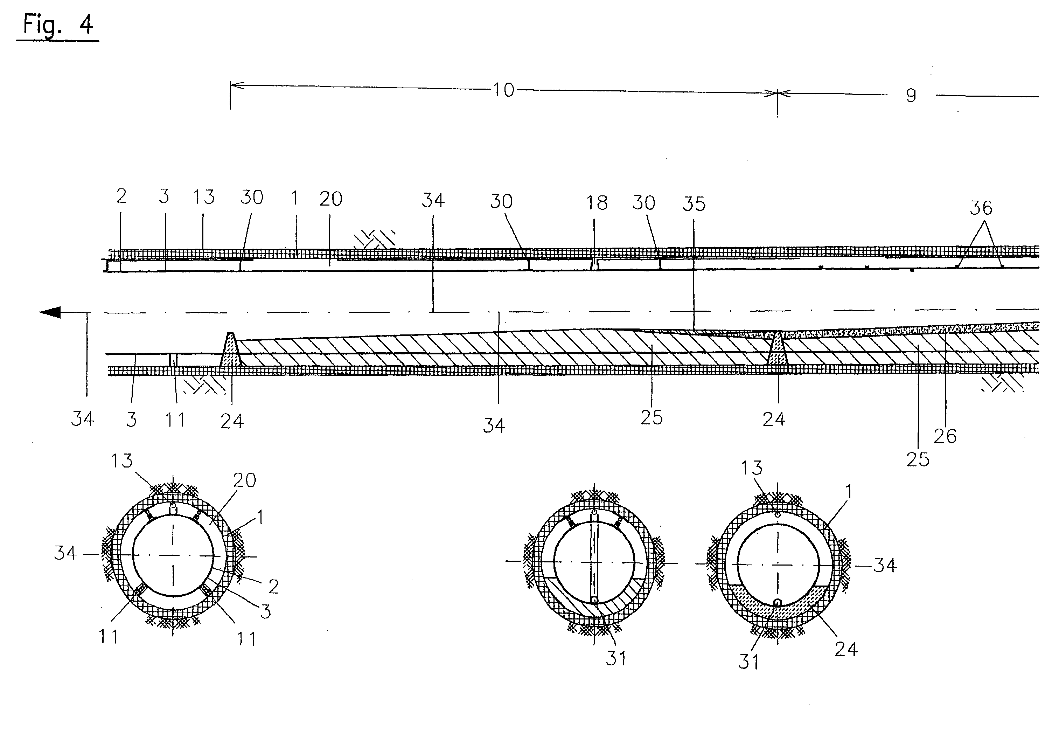

Der Rohrstrang 2 wird in üblicher Weise in den Stollen 1 eingebracht, indem einzelne Rohrabschnitte mittels Transportrollen 11 (Fig. 4) in Position gebracht werden und die einzelnen Rohrabschnitte nacheinander mittels Innenschweißnähten 12 miteinander verschweißt werden. Außerdem sind auch Außenschweißnähte 36 vorhanden, die im Schacht erstellt werden. Die Schweißnähte sind in diesem Fall alle 12,0 m vorhanden. Das Ende des Stollens ist mittels einer Abmauerung 14 verschlossen, vgl. Fig. 1.

In Arbeitsrichtung A gesehen (vgl. Fig. 4) vorauseilend werden, bevor an die entsprechende Stelle ein Rohrabschnitt hingeführt wird, in der Firste des Stollens 1 Nachverpress-Rohrleitungsanordnungen 13 parallel zur Rohrleitungsachse 34 befestigt, deren freie, nach unten abgewinkelte Enden 15 (vgl. z.B. Fig. 5) in axialer Richtung auf der Höhe der später noch herzustellenden Öffnungen 16 im Rohrstrang 2 enden.

Im Scheitel des Rohrstrangs 2 werden Öffnungen 16 hergestellt, wobei für jeden Abschnitt 4 bis 10 eine Öffnung 16 vorgesehen ist. Die Position der Öffnung 16 relativ zu den beiden Enden des Abschnitts 4 bis 10 bestimmt sich insbesondere nach der Neigung des Stollens 1 bzw. des Rohrstranges 2 und der Fließfähigkeit des verwendeten Füllbetons. Die Lage der Öffnung 16 ist grundsätzlich auch abhängig von der Länge des einzelnen Rohres 3 bzw. der Länge der jeweils eingefahrenen Rohrstränge 2 in den Stollen 1. Die Öffnung 16 ist von der Mitte in Richtung rohraufwärts versetzt. Im vorliegenden Fall befindet sich die Öffnung ca. 50 m vom rohraufwärtigen Ende und 100 m vom rohrabwärtigen Ende eines jeden Abschnitts 4 bis 10 entfernt. Die Öffnung 16 wird durch Herausschweißen einer Platte erstellt, die zum späteren Wiederverschließen der Öffnung 16 aufbewahrt wird.

Anschließend wird eine gewölbte Platte 17, die einen Füllstutzen 18 trägt, konzentrisch zur Öffnung 16 an der Außenseite des Stahlrohrs (Produktenrohrs) 3 druckdicht aufgesetzt und aufgeschweißt derart, dass der Füllstutzen 18 senkrecht nach oben weist.

Die Nachverpress-Rohrleitungsanordnungen 13 weisen jeweils einen Rohrabschnitt 19 (Leitungen mindestens DN 50 mm) auf, der eine Vielzahl von an seinem Umfang verteilte Aufbohrungen aufweist, die zunächst jedoch beispielsweise mittels eines Klebebandes dicht verschlossen sind, so dass beim späteren drucklosen Einbringen des Füllbetons in den Hohlraum 20, die Nachverpress-Rohrleitungsanordnungen 13 frei von Füllbeton bleiben.

In den Füllstutzen 18 wird ein Kunststoffrohr 21 eingeschoben und so weit nach oben an den Hohlraumscheitel 22 herangeschoben, wie dies aufgrund der Nachverpress-Rohrleitungsanordnungen 13 möglich ist. Das Kunststoffrohr 21 wird schließlich mit Dichtmittel im Füllstutzen 18 eingeklebt. Die nach unten weisenden Enden 15 der Nachverpress-Rohrleitungsanordnungen 13 befinden sich hierbei innerhalb des Kunststoffrohrs 21.

Weiterhin wird in den an seinem unteren Bereich mit einem Innengewinde ausgestatteten Füllstutzen 18 ein mit einem Außengewinde versehenes Rohrstück 23 eingeschraubt, an das später im Betrieb verschiedene Einrichtungen ansetzbar sind.

Des Weiteren werden entlang des Rohrstranges 2 Fließbarrieren 24 aus Einkornbeton eingebaut, wobei diese Fließbarrieren die Enden der jeweiligen Abschnitte 4 bis 10 definieren. Die Abstände der Fließbarrieren 24 untereinander sind, wie bereits weiter oben erläutert, durch das vorgegebene Gefälle der Rohrleitung und den Fließwinkel des gewählten Füllbetons festgelegt. Die Fließbarrieren 24 definieren die Länge der einzelnen Füllabschnitte 4 bis 10.

Die Menge der ersten Fülllage 25 ist u. a. abhängig von der Auftriebskraft des flüssigen Füllbetons und dem Gewicht der Rohrleitung zwischen den Fließbarrieren 24. Die Auftriebskraft des Füllbetons darf das Gewicht der Rohrleitung bei verringerter Anzahl der eingebauten Auftriebssicherungen 30 nicht überschreiten.

Nach dem Absetzen und Verfestigen der ersten Fülllage 25 wird eine geringmächtige, spezifische leichtere Füllbetonmischung eingebracht (zweite Fülllage 26), um den am Rohrstrang 2 entstandenen Absetzspalt zu verschließen, erneute Auftriebskräfte auf das Rohr 3 zu verhindern und die Adhäsionskräfte zwischen Rohr 3 und Füllbeton zu sichern.

Nach dem jeweiligen Ansteifen des Füllbetons kann in weiteren Lagen (dritte Fülllage 27, vierte Fülllage 28, fünfte Fülllage 29) verfüllt werden, bis der Füllbeton am nächsten Füllstutzen 18 austritt.

Nach einer jeden Füllung (mit Ausnahme der letzten) wird zur Reinigung des Systems eine Wasserspülung durchgeführt, um die Durchgängigkeit des Füllstutzens 18 für die nächste Füllbetoneinbringung zu sichern. Das eingebrachte Spülwasser verändert nicht die Konsistenz des Füllbetons; diese würde nur durch Zwangsmischung verändert werden. Das Spülwasser sammelt sich in den sich ausbildenden Mulden des eingebrachten Füllbetons als Absetzwasser 35 und wird vom nachfolgend eingebrachten Füllbeton verdrängt. Diese Reinigung der Füllstutzen 13 erfolgt über eine an das Rohrstück 23 angeschlossene Druckleitung 31, nachdem diese durch Einleiten von Wasser anstelle von Füllbeton gereinigt wurde.

Nach dem Einbringen der letzten Fülllage 29 am vorhergehenden Abschnitt wird am in Arbeitsrichtung A benachbarten Abschnitt eine Wasserspüleinrichtung 32 (vgl. Fig. 6) am Rohrstück 23 des Füllstutzens 18 angeschlossen und eine Wasserspülung durchgeführt, um die Wegigkeit für die letzte Fülllage 29 sicherzustellen.

Die Reinigung der Druckleitung 31 erfolgt durch Wasserspülung und Entleerung der mit Füllbeton gefüllten Leitung in einen noch nicht beaufschlagten Abschnitt.

Nachdem der Füllbinder ein Absetzmaß von 3 % hat, entsteht über der letzten Fülllage (fünfte Fülllage 29) ein Hohlraum infolge Absetzung. Im Bereich des Füllstutzens 18 ist die Absetzhöhe nur noch im Millimeterbereich und der Nachverpressabschnitt somit abgegrenzt. Beim nachfolgenden Verpressen des verbleibenden Restraumes kann Absetzwasser und Luft durch diesen Spalt entweichen, oder aber es kann durch eine Lüftungsleitung 37 entweichen, die im folgenden im Zusammenhang mit dem Verpressen des Restraumes in der Firste beschrieben wird.

Es wird nun auf Fig. 7 Bezug genommen. Nachdem der Füllstutzen 18 nach beginnender Ansteifung des Füllbetons händisch bis zum unteren Ende der Nachverpress-Rohrleitungsanordnung 13 gereinigt wurde, werden zur Nachverpressung Nachverpressleitungen 38 mit den nach unten weisenden Enden 15 der fest installierten Nachverpress-Rohrleitungsanordnungen 13 verbunden. Weiterhin wird die Lüftungsleitung 37 durch den Füllstutzen 18 geführt, die unmittelbar unter der Firste endet, um die hier vorhandene Luft möglichst vollständig abführen zu können. Über eine Quetschdichtung 39, die außen am Rohrstück 23 anliegt und durch die hindurch die beiden Nachverpressleitungen 38 und die Lüftungsleitung 37 geführt sind, wird der Außenraum gegenüber dem Innenraum abgedichtet.

Während der fortlaufenden Befüllung weiterer Abschnitte kann durch Eindrosselung der Füllleitung der erforderliche Druck (ca. 7 bar) für die Verpressung des Restraumes in der Firste aufgebaut werden. Die an den Rohrabschnitten 19 der Nachverpress-Rohrleitungsanordnungen 13 befindlichen Abklebungen werden hierbei überdrückt, und Füllbeton dringt in den Restraum. Die Nachverpressung erfolgt zumeist vom Hochpunkt zum Tiefpunkt des jeweiligen Abschnittes, um möglichst alles Wasser sowie die vorhandene Luft über die Lüftungsleitung 37 zu verdrängen.

Die Nachverpressung erfolgt solange, bis am nächsten Füllstutzen 18 Füllbeton austritt oder bei Erreichen des Verpressdruckes kein Materialfluss mehr feststellbar ist. Die Nachverpressung erfolgt Abschnitt für Abschnitt in Arbeitsrichtung fortschreitend.

Nach Fertigstellung der Nachverpressung werden die Nachverpressleitungen 38 und die Lüftungsleitung 37 sowie die Quetschdichtung 39 wieder ausgebaut, und nach Reinigung des Füllstutzens 18 und Ausbau des Rohrstücks 23 wird eine Quetschdichtung 40 (vgl. Fig. 8) in den Füllstutzen 18 bzw. das hierin befestigte Rohr 21 eingebaut, um Feuchtigkeit aus dem Füllbeton zurückzuhalten.

Abschließend wird die früher zur Entstehung der Öffnung herausgeschweißte Rohrplatte 41 wieder eingeschweißt.

Die Erfindung kann also wie folgt zusammengefasst werden:

Die planmäßige Rohrverlegung erfolgt in den bereits erstellten Hohlräumen (Stollen, Versorgungstunnel etc.). Die Voraussetzungen für das Einbringen von Füllbeton durch den Rohrscheitel in den umgebenden Hohlraum sind zu schaffen. Zu einem späteren Zeitpunkt wird der Hohlraum in vorgegebenen Abschnitten lagenweise verfüllt; die Auftriebskräfte des flüssigen Füllbetons sind dabei zu berücksichtigen. Nach dem Aushärten der letzten Fülllage wird der sich einstellende Restraum in der Firste abschnittsweise verpresst. Luft und Absetzwasser werden verdrückt und abgeleitet.

Die Trennung von Rohrverlegung und Rohrumhüllung in voneinander unabhängige Arbeitstakte garantiert:
- das endlose Vorbauen der Rohrleitung
- definierte Verfüllabschnitte sehr großer Länge
- definierte Verpressabschnitte sehr großer Länge
- den Betrieb als Untertagebaustelle mit 24 h/Tag für jede einzelne Berufsgruppe (Rohrleger, Betonbauer) in jeder Arbeitsphase, so lange die Verfüllung sinnvoll nacheilt
- die spannungsfreie Verbindung der einzelnen Rohrstränge, da immer nur freie Rohrenden im Hohlraum miteinander verbunden werden
- geringe Auftriebskräfte auf die Rohrleitung durch lagenweises Einbringen des Füllbetons
- die geforderte Überdeckung der Rohrleitung mit Füllbeton als Korrosionsschutz
- das Verfüllen des Restraumes in der Friste mit großen Drücken während des normalen Befüllens
- das Verfüllen des Restraumes in der Firste in definierten Abschnitten
- hohlraumfreies Verfüllen,
   dadurch keine Setzungen durch Einbruch des Gebirges
   dadurch keine Wasserwegigkeit in der Hohlraumfirste
   dadurch keine Gasansammlungen in der Hohlraumfirste
- keine Verschmutzung des Rohrstrangs durch Füllbeton
- das Entleeren der gesamten angelieferten Füllbetonmenge in den Hohlraum
(keine Entsorgung von Rest- bzw. Überschussmengen als Sondermüll erforderlich)
- das Reinigen der Druckleitung durch Wasserspülung in den Hohlraum
- das Reinigen der Füllstutzen durch Wasserspülung aus der Druckleitung
- die Nutzung der Druckleitung als Füll-, Verpress- und Wasserspülleitung
- keine vertikalen Schwindfugen an den Abschottungen
- kurze Ausführungszeiten
- wirtschaftliche Herstellungskosten

### BEZUGSZEICHENLISTE

- 1: Stollen
- 2: Rohrstrang
- 3: Stahlrohr
- 4: erster Abschnitt
- 5: zweiter Abschnitt
- 6: dritter Abschnitt
- 7: vierter Abschnitt
- 8: fünfter Abschnitt
- 9: sechster Abschnitt
- 10: siebenter Abschnitt
- 11: Transportrollen
- 12: Innenschweißnaht
- 13: Nachverpress-Rohrleitungsanordnung
- 14: Abmauerung
- 15: abgewinkelte Enden von 13
- 16: Öffnung
- 17: gewölbte Platte
- 18: Füllstutzen
- 19: Rohrabschnitt
- 20: Hohlraum
- 21: Kunststoffrohr
- 22: Hohlraumscheitel
- 23: Rohrstück
- 24: Fließbarriere
- 25: erste Fülllage
- 26: zweite Fülllage
- 27: dritte Fülllage
- 28: vierte Fülllage
- 29: fünfte Fülllage
- 30: Auftriebssicherung
- 31: Hochdruckleitung
- 32: Wasserspüleinrichtung
- 33: Füllstandskontrolle
- 34: Rohrleitungsachse
- 35: Absetzwasser
- 36: Außenschweißnähte
- 37: Lüftungsleitung
- 38: Nachverpressleitungen
- 39: Quetschdichtung
- 40: Quetschdichtung
- 41: Platte

## Patentansprüche

1. Verfahren zur Umhüllung eines in einem eine Stollenwandung aufweisenden Stollen endlos verlegten Rohrstrangs mit Füllbeton, mit in Axialrichtung des Stollens fortschreitender Arbeitsrichtung, wobei Rohrverlegung und Rohrumhüllung in voneinander unabhängigen Arbeitstakten ausgeführt werden und der Stollen einschließlich des Rohrstranges in Abschnitte gleicher Länge eingeteilt wird und in jedem Abschnitt im Rohrscheitel eine Öffnung zum Einleiten des Füllbetons in einen Hohlraum zwischen dem Rohrstrang und der Stollenwandung angebracht wird,
**dadurch gekennzeichnet, dass**
der Füllbeton in mehreren Lagen (25 bis 29) durch die Öffnung (16) in den Hohlraum (20) zwischen dem Rohrstrang (2) und der Stollenwandung in jedem Abschnitt (4 bis 10) eingebracht wird, wobei als erste Fülllage (25) eine solche Menge von Füllbeton eingebracht wird, dass in dem Abschnitt die Auftriebskraft des Füllbetons das Gewicht der Rohrleitung im Wesentlichen nicht überschreitet, und nach Absetzen und Verfestigen der ersten Fülllage (25) ein zweite Fülllage (26) zum Verschließen eines Absetzspaltes sowie der Sicherung von Adhäsionskräften zwischen dem Rohrstrang (2) und dem Füllbeton eingebracht wird und nach dem jeweiligen Ansteifen des Füllbetons lagenweise der Hohlraum (20) zwischen dem Rohrstrang (2) und der Stollenwandung im Wesentlichen vollständig verfüllt wird, wobei zumindest das Einbringen der jeweils letzten Lage (29) vorzugsweise in in Arbeitsrichtung (A) aufeinander folgenden Abschnitten (4 bis 10) erfolgt, und dass die Öffnungen (16) der gefüllten Abschnitte (4 bis 10) anschließend verschlossen werden.

2. Verfahren nach Anspruch 1, **dadurch gekennzeichnet, dass** das Verfahren weiterhin folgende Schritte umfasst:
a) in jedem Abschnitt (4 bis 10) Befestigen von an der Firste des Stollens (1) in Axialrichtung verlaufenden Nachpress-Rohrleitungsanordnungen (13), die oberhalb der jeweiligen Öffnung (16) enden, und zwar vor dem lageweisen Einbringen des Füllbetons;
b) nach dem vollständigen Einbringen aller Lagen des Füllbetons Nachverpressung durch Einbringen von Füllbeton in die Nachverpress-Rohrleitungsanordnungen (13) durch den Rohrstrang (2) hindurch und durch die jeweilige Öffnung (16) hindurch.

3. Verfahren nach Anspruch 1 oder 2, **dadurch gekennzeichnet, dass** es weiterhin folgenden Schritt umfasst:
Einbringen von Spülwasser nach dem Einbringen einer jeden Lage (25 bis 28) des Füllbetons mit Ausnahme der letzten Lage (29).

4. Verfahren nach einem der vorhergehenden Ansprüche, **dadurch gekennzeichnet, dass** es weiterhin folgenden Schritt umfasst:
Einbringen von Spülwasser nach dem Einbringen der letzten Lage (29) im jeweils vorhergehenden Abschnitt.

5. Verfahren nach einem der vorhergehenden Ansprüche, **dadurch gekennzeichnet, dass** nach dem Anbringen der Öffnung (16) im Rohrscheitel eines Abschnitts (4 bis 10) und vor dem Einleiten des Füllbetons in diesem Abschnitt auf die jeweilige Öffnung (16) auf die Außenseite des Rohrstrangs (2) ein sich senkrecht nach oben erstreckender Füllstutzen (18) aufgesetzt wird, der sich vorzugsweise bis nahe zur Firste des Stollens (1) erstreckt.

6. Verfahren nach Anspruch 5, **dadurch gekennzeichnet, dass** die Öffnung des Füllstutzens (18) vor dem Verschließen der Öffnung (16) im Rohrscheitel des Rohrstrangs (2) abgedichtet wird.

7. Verfahren nach einem der vorhergehenden Ansprüche, **dadurch gekennzeichnet, dass** vor dem lageweisen Einbringen des Füllbetons an den jeweiligen Abschnittsgrenzen Fließbarrieren (24) eingebaut werden.

8. Verfahren nach Anspruch 7, **dadurch gekennzeichnet, dass** die Fließbarrieren (24) aus Einkornbeton hergestellt werden.

9. Verfahren nach einem der vorhergehenden Ansprüche, **dadurch gekennzeichnet, dass** man beim lageweisen Einbringen des Füllbetons jede Füllbeton-Lage (25 bis 29) vor dem Einbringen der nächsten Lage anhärten lässt.

10. Verfahren nach einem der vorhergehenden Ansprüche, **dadurch gekennzeichnet, dass** das lageweise Einbringen des Füllbetons durch folgende Schritte erfolgt:
a) Einbringen mindestens einer ersten Fülllage, bis der Rohrstrangabschnitt eines Abschnitts auf der Fülllage aufzuschwimmen beginnt bzw. gerade noch nicht aufschwimmt,
b) Einbringen einer zweiten Fülllage aus spezifisch leichterem Füllbeton nach dem Absetzen und Verfestigen der mindestens ersten Fülllage, und
c) Einbringen weiterer Fülllagen nach zumindest teilweisem Verfestigen der vorhergehenden Lage.

11. System zur Umhüllung eines in einem Stollen endlos verlegten Rohrstrangs mit Füllbeton, mit einer in Axialrichtung des Stollens fortschreitenden Arbeitsrichtung, wobei der Rohrstrang samt Stollen in mehrere Abschnitte eingeteilt ist und in jedem Abschnitt eine wiederverschließbare Öffnung im Rohrscheitel, ein Füllstutzen, der im Bereich der Öffnung am Rohrstrang befestigt ist und senkrecht nach oben ausgerichtet ist, und eine im Inneren des Rohrstranges verlaufende und an den Füllstutzen lösbar anschließbare Hochdruckleitung für Füllbeton vorgesehen sind, **gekennzeichnet durch** mindestens eine in der Firste des Stollens (1) angeordnete, fest installierte Nachverpress-Rohrleitungsanordnung (13), die im Bereich des Füllstutzens (18) endet, und mindestens eine im Inneren des Rohrstrangs (2) verlaufende und anstelle der Hochdruckleitung (31) mit dem Füllstutzen (18) lösbar verbindbare und an die mindestens eine fest installierte Nachverpress-Rohrleitungsanordnung (13) anschließbare Nachverpressleitung (38).

12. System nach Anspruch 11, **dadurch gekennzeichnet, dass** zwei fest installierte Nachverpress-Rohrleitungsanordnungen (13) vorgesehen sind, die sich vom Füllstutzen (18) aus im Wesentlichen in entgegengesetzte Richtungen erstrecken.

13. System nach Anspruch 11 oder 12, **dadurch gekennzeichnet, dass** jede Nachverpress-Rohrleitungsanordnung (13) einen Rohrabschnitt (19) mit einer Anzahl von über den Rohrabschnitt (19) verteilten radialen Durchgangsbohrungen aufweist.

14. System nach Anspruch 13, **dadurch gekennzeichnet, dass** die Durchgangsbohrungen zunächst verschlossen sind, insbesondere mittels Klebeband.

15. System nach einem der Ansprüche 11 bis 14, **dadurch gekennzeichnet, dass** der Füllstutzen (18) an der Außenseite des Rohrstrangs (2) am Rohrstrang angeschweißt ist.

16. System nach einem der Ansprüche 11 bis 15, **dadurch gekennzeichnet, dass** der Füllstutzen (18) als Gewindestutzen ausgebildet ist.

17. System nach einem der Ansprüche 11 bis 16, **dadurch gekennzeichnet, dass** der Füllstutzen (18) über einen gewölbten Flansch (17) druckdicht am Rohrstrang befestigt ist.

18. System nach einem der Ansprüche 11 bis 17, **dadurch gekennzeichnet, dass** in den Füllstutzen (18) ein sich nach oben erstreckendes Kunststoffrohr (21) eingesetzt ist, das mit dem Füllstutzen (18) verklebt ist.

19. System nach einem der Ansprüche 11 bis 18, **dadurch gekennzeichnet, dass** in den Füllstutzen (18) ein sich nach unten erstreckendes Rohrstück (23) lösbar eingesetzt ist, insbesondere eingeschraubt ist.

20. System nach einem der Ansprüche 11 bis 19, **dadurch gekennzeichnet, dass** zusätzlich zu der mindestens einen Nachverpressleitung (38) eine Lüftungsleitung (37) zum Abführen von Luft bzw. Wasser vorgesehen ist, die im Inneren des Rohrstrangs (2) verläuft, durch den Füllstutzen (18) hindurch nach oben geführt ist und an der Firste des Stollens (1) endet.

21. System nach einem der Ansprüche 11 bis 20, **dadurch gekennzeichnet, dass** weiterhin eine im Inneren des Rohrstrangs (2) verlaufende und anstelle der Hochdruckleitung (31) mit dem Füllstutzen (18) lösbar verbindbare Leitung (32) zum Zuführen von Spülwasser vorgesehen ist.

22. System nach einem der Ansprüche 11 bis 21, **dadurch gekennzeichnet, dass** weiterhin eine in den Füllstutzen (18) oder in das hierin befestigte Kunststoffrohr (21) nach Anspruch 18 einsetzbare Dichtung (13), insbesondere Quetschdichtung, zum Abdichten des Außenraums gegenüber dem Innenraum vorgesehen ist.

23. System nach einem der Ansprüche 11 bis 22, **gekennzeichnet durch** eine Rohrplatte (41), die **durch** Erstellen der Öffnung (16) entstanden ist und zum Wiederverschließen der Öffnung (16) mittels Schweißung dient.

## Claims

1. Method of encasing a pipe conduit, laid in an endless manner in a gallery having a gallery wall, with backfill concrete, with a working direction advancing in the axial direction of the gallery, the pipe laying and pipe encasing being effected in work cycles independent of one another, and the gallery including the pipe conduit being divided into sections of equal length, and an opening for introducing the backfill concrete into a cavity between the pipe conduit and the gallery wall being made in each section at the pipe apex, **characterized in that** the backfill concrete is introduced in a plurality of layers (25 to 29) through the opening (16) into the cavity (20) between the pipe conduit (2) and the gallery wall in each section (4 to 10), such a quantity of backfill concrete being introduced as first filling layer (25) that, in the section, the uplift force of the backfill concrete essentially does not exceed the weight of the pipeline, and a second filling layer (26) for closing the settling gap and for ensuring the adhesion forces between the pipe conduit (2) and the backfill concrete is introduced after the settling and consolidation of the first filling layer (25), and the cavity (20) between the pipe conduit (2) and the gallery wall is essentially filled completely layer by layer after the respective stiffening of the backfill concrete, at least the introduction of the respectively last layer (29) preferably being effected in sections (4 to 10) following one another in the working direction and **in that** the openings (16) of the filled sections (4 to 10) are then closed.

2. Method according to Claim 1, **characterized in that** the method also comprises the following steps:
a) fastening of subsequent-grouting pipeline arrangements (13) in each section (4 to 10), these subsequent-grouting pipeline arrangements (13) running at the roof of the gallery (1) in the axial direction and ending above the respective opening (16), to be precise before introducing the backfill concrete layer by layer;
b), after the introduction of all the layers of the backfill concrete has been completed, subsequent grouting by introducing backfill concrete into the subsequent-grouting pipeline arrangements (13) through the pipe conduit (2) and through the respective opening (16).

3. Method according to Claim 1 or 2, **characterized in that** it also comprises the following step:
introducing flushing water after the introduction of each layer (25 to 28) of the backfill concrete, with the exception of the last layer (29).

4. Method according to one of the preceding claims, **characterized in that** it also comprises the following step:
introducing flushing water after the placement of the last layer (29) in the respectively preceding section.

5. Method according to one of the preceding claims, **characterized in that**, after the opening (16) has been made at the pipe apex in a section (4 to 10) and before introducing the backfill concrete in this section, a filling connection (18) extending perpendicularly upwards is put onto the respective opening (16) onto the outside of the pipe conduit (2), this filling connection (18) preferably extending up close to the roof of the gallery (1).

6. Method according to Claim 5, **characterized in that** the opening of the filling connection (18) is sealed off before the opening (16) at the pipe apex of the pipe conduit (2) is closed and sealed.

7. Method according to one of the preceding claims, **characterized in that** flow barriers (24) are fitted at the respective section boundaries before introducing the backfill concrete layer by layer.

8. Method according to Claim 7, **characterized in that** the flow barriers (24) are produced from like-grained concrete.

9. Method according to in one of the preceding claims, **characterized in that**, during the introduction of the backfill concrete layer by layer, each backfill-concrete layer (25 to 29) is allowed to harden before the next layer is introduced.

10. Method according to one of the preceding claims, **characterized in that** the introduction of the backfill concrete layer by layer is effected by the following steps:
a) introduction of at least one filling layer until the pipe-conduit section of a section begins to float or has not quite started to float on the filling layer,
b) introduction of a second filling layer of specifically lighter backfill concrete after the settling and consolidation of at least the first filling layer, and
c) introduction of further filling layers after at least partial consolidation of the preceding layer.

11. System for encasing a pipe conduit, laid in a gallery in an endless manner, with backfill concrete, with a working direction advancing in the axial direction of the gallery, the pipe conduit together with gallery being divided into a plurality of sections and the following being provided in each section: a reclosable opening at the pipe apex, a filling connection which is fastened in the region of the opening to the pipe conduit and is oriented perpendicularly upwards, and a high-pressure line, which runs in the interior of the pipe conduit and can be releasably connected to the filling connection, for backfill concrete, **characterized by** at least one firmly installed subsequent-grouting pipeline arrangement (13) which is arranged at the roof of the gallery (1) and ends in the region of the filling connection (18), and at least one subsequent-grouting line (38) which runs in the interior of the pipe conduit (2) and can be releasably connected to the filling connection (18) instead of the high-pressure line (31) and can be connected to the at least one firmly installed subsequent-grouting pipeline arrangement (13).

12. System according to Claim 11, **characterized in that** two firmly installed subsequent-grouting pipeline arrangements (13) are provided, and these subsequent-grouting pipeline arrangements (13) extend from the filling connection (18) essentially in opposite directions.

13. System according to Claim 11 or 12, **characterized in that** each subsequent-grouting pipeline arrangement (13) has a pipe section (19) with a number of radial through-holes which are distributed over the pipe section (19).

14. System according to Claim 13, **characterized in that** the through-holes are closed to begin with, in particular by means of adhesive tape.

15. System according to one of Claims 11 to 14, **characterized in that** the filling connection (18) is welded to the pipe conduit (2) on the outside of the same.

16. System according to one of Claims 11 to 15, **characterized in that** the filling connection (18) is designed as a threaded connection.

17. System according to one of Claims 11 to 16, **characterized in that** the filling connection (18) is fastened to the pipe conduit in a pressure-tight manner via an arched flange (17).

18. System according to one of Claims 11 to 17, **characterized in that** a plastic pipe (21) extending upwards is inserted into the filling connection (18) and is adhesively bonded to the filling connection (18).

19. System according to one of Claims 11 to 18, **characterized in that** a pipe piece (23) extending downwards is releasably inserted, in particular screwed, into the filling connection (18).

20. System a according to one of Claims 11 to 19, **characterized in that** a ventilation line (37) for drawing off air or water is provided in addition to the at least one subsequent-grouting line (38), and this line (37) runs in the interior of the pipe conduit (2), is directed upwards through the filling connection (18) and ends at the roof of the gallery (1).

21. System according to one of Claims 11 to 20, **characterized in that** a line (32) for supplying flushing water is also provided, which line (32) runs in the interior of the pipe conduit (2) and can be releasably connected to the filling connection (18) instead of the high-pressure line (31).

22. System according to one of Claims 11 to 21, **characterized in that** a seal (13), in particular a compression seal for sealing off the exterior space from the interior space, is also provided, which seal (13) can be inserted into the filling connection (18) or into the plastic pipe (2), fastened therein, according to Claim 18.

23. System according to one of Claims 11 to 22, **characterized by** a pipe plate (41) which has resulted from the production of the opening (16) and serves to close the opening (16) again by means of welding.

## Revendications

1. Procédé permettant d'envelopper par du béton de remplissage une branche de tuyauterie posée en continu dans une galerie présentant une paroi, dans un sens de travail avançant dans le sens axial de la galerie, la pose des tubes et l'enveloppement des tubes étant réalisés dans des phases de travail indépendantes l'une de l'autre et la galerie, y compris la branche de tuyauterie, étant divisée en tronçons de même longueur et une ouverture permettant l'introduction du béton de remplissage dans un vide entre la branche de tuyauterie et la paroi de la galerie, étant placée dans chaque tronçon au sommet du tube,
**caractérisé en ce que**
le béton de remplissage est introduit en plusieurs couches (25 à 29) par l'ouverture (16) dans le vide (20) entre la branche de tuyauterie (2) et la paroi de la galerie dans chaque tronçon (4 à 10), la quantité de béton de remplissage introduite en tant que première couche de remplissage (25) étant telle que, dans le tronçon, la force portante du béton de remplissage ne dépasse pas essentiellement le poids de la canalisation, et après le tassement et la solidification de la première couche de remplissage (25) on introduit une deuxième couche de remplissage (26) pour fermer une fente d'affaissement et, pour assurer les forces d'adhésion entre la branche de tuyauterie (2) et le béton de remplissage, on introduit une deuxième couche de remplissage (26) et, après chaque prise du béton de remplissage, le vide (20) entre la branche de tuyauterie (2) et la paroi de la galerie est, pour l'essentiel, entièrement rempli par couchés, au moins l'introduction de chaque dernière couche (29) ayant lieu de préférence en tronçons (4 à 10) successifs dans le sens du travail (A), et **en ce que** les ouvertures (16) des tronçons remplis (4 à 10) sont ensuite fermées.

2. Procédé selon la revendication 1, **caractérisé en ce que** le procédé comporte par ailleurs les étapes suivantes :
a) dans chaque tronçon (4 à 10), fixation de dispositions de canalisation repressées (13) s'étendant dans le sens axial au sommet de la galerie (1), dispositions qui se terminent au-dessus de l'ouverture (16) concernée, et ce avant l'introduction par couches du béton de remplissage ;
b) après l'introduction complète de toutes les couches de béton de remplissage, recompression par introduction de béton de remplissage dans les dispositions de canalisation repressées (13) à travers la branche de tuyauterie (2) et à travers l'ouverture concernée (16).

3. Procédé selon la revendication 1 ou 2, **caractérisé en ce qu'**il comprend par ailleurs l'étape suivante :
Introduction d'eau de rinçage après l'introduction de chaque couche (25 à 28) de béton de remplissage à l'exception de la dernière couche (29).

4. Procédé selon l'une quelconque des revendications précédentes, **caractérisé en ce qu'**il comporte par ailleurs l'étape suivante :
Introduction d'eau de rinçage après l'introduction de la dernière couche (29) dans le tronçon précédent concerné.

5. Procédé selon l'une quelconque des revendications précédentes, **caractérisé en ce que**, après la mise en place de l'ouverture (16) au sommet du tube d'un tronçon (4 à 10) et avant l'introduction du béton de remplissage dans ce tronçon sur l'ouverture (16) concernée sur le côté extérieur de la branche de tuyauterie (2), on dépose une tubulure de remplissage (18) s'étendant perpendiculairement vers le haut, tubulure qui s'étend de préférence jusqu'à proximité du faîte de la galerie (1).

6. Procédé selon la revendication 5, **caractérisé en ce que** l'ouverture de la tubulure de remplissage (18) est bouchée avant la fermeture de l'ouverture (16) au sommet de la branche de tuyauterie (2).

7. Procédé selon l'une quelconque des revendications précédentes, **caractérisé en ce que** l'on pose des barrières d'écoulement (24) contre les limites de tronçon concernées avant l'introduction du béton de remplissage par couches.

8. Procédé selon la revendication 7, **caractérisé en ce que** les barrières d'écoulement (24) sont fabriquées à partir de béton monogranulaire.

9. Procédé selon l'une quelconque des revendications précédentes, **caractérisé en ce que**, lors de l'introduction par couches du béton de remplissage, on laisse durcir chaque couche de béton de remplissage (25 à 29) avant d'introduire la couche suivante.

10. Procédé selon l'une quelconque des revendications précédentes, **caractérisé en ce que** l'introduction par couches du béton de remplissage comporte les étapes suivantes :
a) Introduction d'au moins une première couche de remplissage jusqu'à ce que le tronçon de branche de tuyauterie d'un tronçon commence à nager sur la couche de remplissage respectivement est sur le point de nager,
b) introduction d'une deuxième couche de remplissage en béton de remplissage spécifiquement plus léger après le tassement et le durcissement d'au moins la première couche et
c) introduction d'autres couches de remplissage après le durcissement, du moins partiel, de la couche précédente.

11. Système permettant d'envelopper par du béton de remplissage une branche de tuyauterie posée en continu dans une galerie, dans un sens de travail avançant dans le sens axial de la galerie, la branche de tuyauterie y compris la galerie étant divisée en plusieurs tronçons et, dans chaque tronçon, une ouverture refermable étant fixée au sommet des tubes, une tubulure de remplissage, fixée au niveau de l'ouverture de la branche de tuyauterie et dirigée perpendiculairement vers le haut et une conduite haute pression pour béton de remplissage s'étendant à l'intérieur de la branche de tuyauterie et pouvant être raccordée de manière détachable à la tubulure de remplissage, étant prévues, **caractérisé par** au moins une disposition de canalisation repressée (13) installée fixement et disposée au faîte de la galerie (1), disposition qui se termine au niveau de la tubulure de remplissage (18), et au moins une conduite de recompression (38) s'étendant à l'intérieur de la branche de tuyauterie (2) et pouvant être reliée de manière détachable à la tubulure de remplissage (18) au lieu de la conduite haute pression (31) et pouvant être raccordée à au moins une disposition de canalisation repressée (13) installée fixement.

12. Système selon la revendication 11, **caractérisé en ce que** deux dispositions de canalisation repressées (13) installées fixement sont prévues qui s'étendent depuis la tubulure de remplissage (18) essentiellement dans les directions opposées.

13. Système selon la revendication 11 ou 12, **caractérisé en ce que** chaque disposition de canalisation repressée (13) présente un tronçon de tube (19) ayant un nombre de trous de passage radiaux répartis sur le tronçon de tube (19).

14. Système selon la revendication 13, **caractérisé en ce que** les trous de passage sont tout d'abord obturés, en particulier avec du ruban adhésif.

15. Système selon l'une quelconque des revendications 11 à 14, **caractérisé en ce que** la tubulure de remplissage (18) est soudée sur le côté extérieur de la branche de tuyauterie (2) sur la branche de tuyauterie.

16. Système selon l'une quelconque des revendications 11 à 15, **caractérisé en ce que** la tubulure de remplissage (18) est configurée comme une tubulure filetée.

17. Système selon l'une quelconque des revendications 11 à 16, **caractérisé en ce que** la tubulure de remplissage (18) est fixée à 1a branche de tuyauterie de manière étanche à la pression par l'intermédiaire d'une bride convexe (17).

18. Système selon l'une quelconque des revendications 11 à 17, **caractérisé en ce qu'**un tube en matière plastique (21), s'étendant vers le haut qui est collé à la tubulure de remplissage (18), est placé dans la tubulure de remplissage (18).

19. Système selon l'une quelconque des revendications 11 à 18, **caractérisé en ce qu'**un morceau de tube (23) s'étendant vers le bas, est placé de manière détachable, en particulier vissé, dans la tubulure de remplissage (18).

20. Système selon l'une quelconque des revendications 11 à 19, **caractérisé en ce que**, en plus d'au moins la conduite recompressée (38), il est prévu une conduite d'aération (37) permettant d'évacuer l'air respectivement l'eau, conduite d'aération qui s'étend à l'intérieur de la branche de tuyauterie (2), traverse la tubulure de remplissage (18) vers le haut et se termine au faîte de la galerie (1).

21. Système selon l'une quelconque des revendications 11 à 20, **caractérisé en ce qu'**une conduite (32) passant à l'intérieur de la branche de tuyauterie (2) et pouvant être reliée de manière détachable à la tubulure de remplissage (18) au lieu de la conduite haute pression (31) est prévue pour le transport d'eau de rinçage.

22. Système selon l'une quelconque des revendications 11 à 21, **caractérisé en ce qu'**un joint (13), en particulier un joint à écraser, pouvant être inséré dans la tubulure de remplissage (18) ou dans le tube en matière plastique (21) d'après la revendication 18 fixé dans celle-ci, permettant le colmatage de l'espace extérieur par rapport à l'espace intérieur, est prévu.

23. Système selon l'une quelconque des revendications 11 à 22 **caractérisé par** une plaque tubulaire (41) créée par la confection de l'ouverture (16) et qui sert à refermer l'ouverture (16) par soudage.
